# EUROPÄISCHE PATENTANMELDUNG

(11) **EP 4 628 292 A1**
(43) Veröffentlichungstag der Anmeldung: **08.10.2025**
(21) Anmeldenummer: 25162549.7
(22) Anmeldetag: 10.03.2025
(51) Int. Cl.: B29D 30/54, B29D 30/06, B29L 30/00

(54) **VERFAHREN ZUR VORBEREITUNG VON FAHRZEUGREIFEN FÜR DEN EINSATZ IN DER KALTEN RUNDERNEUERUNG VON FAHRZEUGREIFEN**

(30) Priorität: 05.04.2024 DE 102024203120
(71) Anmelder: Continental Reifen Deutschland GmbH, 30175 Hannover (DE)
(72) Erfinder: Vojtus, Michal, 020 01 Púchov (SK)
(74) Vertreter: Continental Corporation

(57) **Zusammenfassung**

Die Erfindung betrifft ein Verfahren zur Vorbereitung von Fahrzeugreifen (10), insbesondere abgefahrenen Fahrzeugreifen, für den Einsatz in der kalten Runderneuerung, umfassend die Verfahrensschritte: a) Bereitstellen eines Fahrzeugreifens (10) mit einer elektronischen Identifikationseinheit (12), wobei die elektronische Identifikationseinheit (12) umfasst: i) eine elektronische Sendeeinheit (14) zum Senden von Daten in einem drahtlosen Datenübertragungsverfahren, und ii) eine Speichereinheit (16), wobei auf der Speichereinheit (16) Steuerungsinformationen gespeichert sind, b) Senden der auf der Speichereinheit (16) gespeicherten Steuerungsinformationen mit der Sendeeinheit (14) und Empfangen der Steuerungsinformationen mit einer Empfangseinheit, und c) Abtragen eines Laufstreifens des Fahrzeugreifens (10) durch Abtragen von Material mit einer Abtragvorrichtung, wobei das Abtragen in Abhängigkeit von den empfangenen Steuerungsinformationen erfolgt.

## Beschreibung

Die Erfindung betrifft ein Verfahren zur Vorbereitung von Fahrzeugreifen, insbesondere abgefahrenen Fahrzeugreifen, für den Einsatz in der kalten Runderneuerung, ein hieran anschließendes Verfahren zur kalten Runderneuerung eines Fahrzeugreifens, eine für den Einsatz in entsprechenden Verfahren geeignete Abtragvorrichtung sowie einen hierfür geeigneten Fahrzeugreifen. Offenbart werden zudem ein Verfahren zum Nachrüsten eines Fahrzeugreifens, die Verwendung eines entsprechenden Fahrzeugreifens zur Verbesserung der Leistungseigenschaften und die Verwendung einer elektronischen Identifikationseinheit in einem entsprechenden Fahrzeugreifen zur Steigerung der Wiederverwertbarkeit von Fahrzeugreifen.

Die Herstellung von modernen Fahrzeugreifen ist ein aufwendiges und relativ kostenintensives Verfahren, bei dem regelmäßig erhebliche Mengen an wertvollen Rohstoffen eingesetzt werden müssen. Aus diesem Grund wurden Verfahren zur Runderneuerung von Altreifen entwickelt, mit denen es möglich ist, große Teile von Altreifen wiederzuverwerten. Die bekannten Verfahren zur Runderneuerung basieren im Wesentlichen darauf, dass der alte, zumeist verschlissene Laufstreifen abgetragen wird, sodass ein neuer Laufstreifen auf die unterliegende intakte Oberfläche aufgebracht werden kann.

Unter den Verfahren zur Runderneuerung kommt insbesondere der sogenannten kalten Runderneuerung ("cold retread") eine besondere Bedeutung zu. In diesem Verfahren wird der alte Laufstreifen und gegebenenfalls die Seitenwände des Altreifens von der Karkasse und den Gürtellagen ("casing") abgetragen, beispielsweise durch Schleifen. Dadurch bleibt ein Altreifen zurück, dessen außenliegende Oberfläche aufgeraut ist. Kennzeichnend für die kalte Runderneuerung ist, dass die neuen Laufstreifen hierbei vorvulkanisiert ("pre-cured") werden, sodass sie im kalten Runderneuerungsprozess, wie er beispielsweise in Kaltrunderneuerungswerken (sogenannten "retread shops") durchgeführt wird, auf die Casings aufgebracht werden können. Die belastbare Verbindung zwischen dem Altreifen und dem neuen Laufstreifen wird durch ein geeignetes Haftmittel gewährleistet, welches eine stoffschlüssige Verbindung zwischen den beiden Komponenten erzeugt und somit eine langfristige und feste Verbindung zwischen dem Casing und dem neuen Laufstreifen ermöglicht, beispielsweise durch eine Vulkanisation eines schwefelhärtbaren Haftmittels, beispielsweise einer Kautschukmischung.

Die Kaltrunderneuerung wird in den meisten Fällen nicht vom Fahrzeugreifenhersteller selbst, sondern von externen Dienstleistern durchgeführt. Dem Abschleifen des Laufstreifens des Altreifens kommt dabei grundsätzlich eine große Bedeutung zu, da die Leistungseigenschaften eines aus einem Altreifen erhaltenen, kaltrunderneuerten Fahrzeugreifens stark von der Qualität des Casings abhängen. In den meisten Fällen wird es dabei als vorteilhaft empfunden, wenn der Laufstreifen derart abgetragen wird, dass nicht nur die Karkasse des Altreifens, sondern auch die Gürtellagen, vorzugsweise sämtliche Gürtellagen, des Altreifens unbeschädigt bleiben. Häufig wird dabei eine Abtragung des Laufstreifens bevorzugt, die in einem Casing resultiert, dessen Gürtellagen unterhalb der radial außenliegenden Oberfläche des Casings liegen.

Das Abtragen des Laufstreifens des Altreifens wird von externen Dienstleistern allerdings häufig als Herausforderung empfunden, da der konkrete Lagenaufbau der Altreifen in den meisten Fällen nicht bekannt ist. Überdies können die Abmessungen abgenutzter Fahrzeugreifen in Abhängigkeit der Nutzungsparameter des Fahrzeugreifens während seiner Nutzungszeit, beispielsweise durch starke einseitige Belastungen, geringfügig variieren. Hierdurch ist ein automatisiertes Abtragen des Laufstreifens von Altreifen, beispielsweise in Abhängigkeit von Fahrzeugreifentypen, häufig nur schwer umsetzbar.

Das Abtragen des Laufstreifens in Kaltrunderneuerungswerken erfolgt in den meisten Fällen maschinell, beispielsweise durch Schleifwerkzeuge. Die konkrete Abtragungskontur, das heißt die Stärke des abgetragenen Materials an definierten Punkten des Altreifens, wird allerdings häufig durch eine visuelle Sichtkontrolle definiert. Hierdurch ist das Abtragen des Laufstreifens vom Altreifen durch externe Dienstleister häufig zeitaufwändig und personalintensiv. Zudem kann ein optimaler Abtrag des Laufstreifens in den meisten Fällen aufgrund der geringen Kenntnis des Lagenaufbaus des Fahrzeugreifens nicht gewährleistet werden. Deshalb werden aus dem Stand der Technik bekannte Verfahren zur Vorbereitung von Fahrzeugreifen für den Einsatz in der kalten Runderneuerung regelmäßig als fehleranfällig bzw. aufwendig empfunden.

Die primäre Aufgabe der vorliegenden Erfindung war es, die Nachteile des Standes der Technik auszuräumen oder zumindest zu verringern.

Insbesondere war es die Aufgabe der vorliegenden Erfindung, ein Verfahren zur Vorbereitung von Fahrzeugreifen für den Einsatz in der kalten Runderneuerung anzugeben, das den Abtrag eines Laufstreifens eines Fahrzeugreifens, insbesondere eines Altreifens, vom Casing weitgehend automatisiert ermöglichen können sollte, sodass insbesondere personalintensive Arbeitsschritte reduziert werden können sollten. Hierbei war es eine wünschenswerte Vorgabe, dass im anzugebenden Verfahren ein Abstand zwischen Gürtellagen des Casings und radial außenliegender Oberfläche möglichst reproduzierbar erhalten werden können sollte.

Es war zudem eine Aufgabe der vorliegenden Erfindung, dass das anzugebende Verfahren zeiteffizienter als der Stand der Technik durchführbar sein sollte, sodass insbesondere externen Dienstleistern, das heißt Dienstleistern, die nicht der Fahrzeugreifenhersteller selbst sind, die Durchführung einer Vorbereitung von Fahrzeugreifen zum Einsatz in der kalten Runderneuerung von Fahrzeugreifen erleichtert werden sollte.

Es war eine ergänzende Vorgabe der vorliegenden Erfindung, dass das anzugebende Verfahren mit hohen Durchsätzen betreibbar sein sollte und entsprechend große Mengen an Fahrzeugreifen für den Einsatz in der kalten Runderneuerung vorbereiten können sollte.

Darüber hinaus war eine weitere Aufgabe der vorliegenden Erfindung, dass das anzugebende Verfahren es erlauben sollte, eine große Vielzahl an strukturell unterschiedlichen Fahrzeugreifen, d.h. Fahrzeugreifen unterschiedlicher Bauart, nacheinander auf den gleichen Anlagen in zeit- und kosteneffizienter für die kalte Runderneuerung vorzubereiten.

Im Lichte der vorstehenden Ausführungen war es zudem eine Aufgabe, ein Verfahren zur kalten Runderneuerung eines Fahrzeugreifens anzugeben, in welchem die Vorbereitung des Fahrzeugreifens mit dem erfindungsgemäßen Verfahren erfolgt. Hierbei war es eine Aufgabe der vorliegenden Erfindung, dass mit dem anzugebenden Verfahren besonders leistungsstarke Fahrzeugreifen, insbesondere mit einer vorteilhaften Haltbarkeit, erhalten werden können sollten.

Gleichfalls war es eine Aufgabe der vorliegenden Erfindung, eine Abtragvorrichtung zur Vorbereitung von Fahrzeugreifen für den Einsatz in der kalten Runderneuerung anzugeben, welche für den Einsatz im erfindungsgemäßen Verfahren geeignet ist.

Zudem war es eine Aufgabe der vorliegenden Erfindung, neben den anzugebenden Verfahren auch einen vorteilhaften Fahrzeugreifen bereitzustellen, der sich in besonderer Weise für eine spätere Aufbereitung im Rahmen einer Runderneuerung eignet.

Es war eine sekundäre Aufgabe der vorliegenden Erfindung eine Verwendung des anzugebenden Fahrzeugreifens zur Verbesserung der Leistungseigenschaften sowie eine Verwendung einer elektronischen Identifikationseinheit in einem anzugebenden Fahrzeugreifen zur Steigerung der Wiederverwertbarkeit zu identifizieren.

Die Erfinder der vorliegenden Erfindung haben nunmehr gefunden, dass sich die vorstehenden Aufgaben lösen lassen, wenn in einem Verfahren zur Vorbereitung von Fahrzeugreifen für den Einsatz in der kalten Runderneuerung ein Laufstreifen eines Fahrzeugreifens in Abhängigkeit von auf einer elektronischen Identifikationseinheit gespeicherten Steuerungsinformationen abgetragen wird, wie es in den Ansprüchen definiert ist. Hierdurch kann vorteilhafterweise die wiederholte, manuelle Prüfung des auf dem Casing verbleibenden Laufstreifens entfallen, die im Stand der Technik häufig aufgrund unzureichender Kenntnis über den individuellen Lagenaufbau des für die kalte Runderneuerung vorzubereitenden Fahrzeugreifens besteht. Der Erfinder hat erkannt, dass, beispielsweise der Fahrzeugreifenhersteller selbst, Steuerungs- bzw. Strukturinformationen in der elektronischen Identifikationseinheit vorsehen kann, um den Abtrag des Laufstreifen zu erleichtern und hieraus optimierte Casings zu erhalten, aus welchen in der nachgelagerten Runderneuerung runderneuerte Fahrzeugreifen mit verbesserten Leistungseigenschaften resultieren.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verfahren zur kalten Runderneuerung von Fahrzeugreifen, Abtragvorrichtungen, Fahrzeugreifen und Verwendungen ergeben sich aus den Merkmalen bevorzugter Verfahren zur Vorbereitung von Fahrzeugreifen.

Die Erfindung betrifft ein Verfahren zur Vorbereitung von Fahrzeugreifen, insbesondere abgefahrenen Fahrzeugreifen, für den Einsatz in der kalten Runderneuerung, umfassend die Verfahrensschritte:
a) Bereitstellen eines Fahrzeugreifens mit einer elektronischen Identifikationseinheit, wobei die elektronische Identifikationseinheit umfasst:
   i) eine elektronische Sendeeinheit zum Senden von Daten in einem drahtlosen Datenübertragungsverfahren, und
   ii) eine Speichereinheit, wobei auf der Speichereinheit Steuerungsinformationen gespeichert sind,
b) Senden der auf der Speichereinheit gespeicherten Steuerungsinformationen mit der Sendeeinheit und Empfangen der Steuerungsinformationen mit einer Empfangseinheit, und
c) Abtragen eines Laufstreifens des Fahrzeugreifens durch Abtragen von Material mit einer Abtragvorrichtung, wobei das Abtragen in Abhängigkeit von den empfangenen Steuerungsinformationen erfolgt.

Das erfindungsgemäße Verfahren ist zur Vorbereitung von Fahrzeugreifen für den Einsatz in der kalten Runderneuerung geeignet und bestimmt, das heißt es eignet sich insbesondere für Altreifen. Als Altreifen, beziehungsweise abgefahrene Fahrzeugreifen, werden im Rahmen der vorliegenden Erfindung Fahrzeugreifen bezeichnet, welche bereits im Einsatz am Fahrzeug gewesen sind und somit häufig ein zumindest teilweise abgefahrenes Laufstreifenprofil aufweisen. Für die meisten Fälle relevant ist also ein erfindungsgemäßes Verfahren, wobei der Fahrzeugreifen ein abgefahrener Fahrzeugreifen ist.

Altreifen werden dabei in dem meisten Fällen lediglich dann als geeignet für den Einsatz in der kalten Runderneuerung befunden, wenn ihr Laufstreifen und/oder die Seitenwände keine zu starke Abnutzung aufweisen. Dies bedeutet insbesondere, dass die Abnutzung auf die äußeren Schichten des Altreifens beschränkt ist, sodass die unterliegenden Lagen des Fahrzeugreifens, insbesondere die Karkasse und die Gürtellagen, keine Beschädigungen aufweisen. Die Prüfung, ob ein Altreifen für den Einsatz in der kalten Runderneuerung geeignet ist oder nicht, obliegt zumeist dem Runderneuerungswerk. Häufig werden für diese Prüfung eine Vielzahl an Tests des Altreifens durchgeführt, beispielsweise visuelle Sichtprüfungen der Oberfläche. Bevorzugt ist ein erfindungsgemäßes Verfahren, wobei der Fahrzeugreifen für eine Laufstrecke von 20000 km oder mehr, bevorzugt 30000 km oder mehr, besonders bevorzugt 40000 km oder mehr, im Einsatz an einem Fahrzeug gewesen ist. Bevorzugt ist zusätzlich oder alternativ zudem ein erfindungsgemäßes Verfahren, wobei zumindest eine Profilrille des Laufstreifens des Fahrzeugreifens zumindest abschnittsweise ein vorgegebenes Profilrillenkriterium erreicht, insbesondere ein gesetzlich vorgegebenes Profilrillenkriterium. Bevorzugt ist ebenfalls zusätzlich oder alternativ ein erfindungsgemäßes Verfahren, wobei der Fahrzeugreifen 2 Jahre oder mehr, bevorzugt 3 Jahre oder mehr, besonders bevorzugt 5 Jahre oder mehr, im Einsatz an einem Fahrzeug gewesen ist.

Heutzutage wird die kalte Runderneuerung von Fahrzeugreifen insbesondere im Bereich der Nutzfahrzeugreifen durchgeführt, insbesondere bei LKW-Reifen oder Gabelstapler-Reifen. Beispielhaft ist entsprechend ein erfindungsgemäßes Verfahren, wobei der Fahrzeugreifen ein PKW-Reifen oder ein Nutzfahrzeug-Reifen, bevorzugt ein Nutzfahrzeug-Reifen, ist.

Der im erfindungsgemäßen Verfahren bereitgestellte Fahrzeugreifen, welcher von seinem Laufstreifen befreit werden soll, umfasst eine elektronische Identifikationseinheit. Die elektronische Identifikationseinheit umfasst zur Identifizierung des Reifens eine elektronische Sendeeinheit und eine Speichereinheit. Dem Fachmann ist klar, dass die elektronische Identifikationseinheit noch weitere elektronische Komponenten umfassen kann, insbesondere weitere Speichereinheiten. In den meisten Fällen handelt es sich bei der elektronischen Identifikationseinheit um einen elektronischen Chip, der sowohl zum Senden von Daten in drahtlosen Datenübertragungsverfahren als auch zum Speichern von Informationen geeignet ist. Grundsätzlich kann die elektronische Identifikationseinheit im Inneren des Fahrzeugreifens, das heißt beispielsweise zwischen einzelnen Lagen des Fahrzeugreifens, oder im Reifeninneren an der Seitenwand angeordnet werden. In diesem Fall handelt es sich dann um ein erfindungsgemäßes Verfahren, wobei die elektronische Identifikationseinheit im Inneren des Fahrzeugreifens oder in der Seitenwand des Fahrzeugreifens, bevorzugt in der Seitenwand des Fahrzeugreifens, angeordnet ist.

Die elektronische Identifikationseinheit kann beispielsweise Daten zum Reifentypus und/oder zum Reifenhersteller umfassen. Diese Informationen werden zumeist auf der Speichereinheit der elektronischen Identifikationseinheit zum Abruf gespeichert. Beim Einsatz geeigneter Übertragungstechnologien, wie beispielsweise RFID, ist es nicht erforderlich, dass die elektronische Identifikationseinheit eine eigene Energieversorgungseinheit, beispielsweise in Form einer Batterie, umfasst. Vorteilhafterweise kann hierdurch die Dimension der elektronischen Identifikationseinheit minimiert werden. Zudem kann hierdurch eine übermäßig häufige Aktivierung der elektronischen Komponenten der Identifikationseinheit erfolgreich vermieden werden, da lediglich durch externe Energieversorgungseinrichtungen eine Aktivierung der elektronischen Identifikationseinheit erfolgen kann. In einigen wenigen Anwendungsfällen kann es allerdings auch vorteilhaft sein, die elektronische Identifikationseinheit mit einer eigenen Energieversorgungseinheit auszustatten, beispielsweise wenn ein regelmäßiges Senden von Daten mit der elektronischen Sendeeinheit gewünscht ist. Bevorzugt ist somit ein erfindungsgemäßes Verfahren, wobei die elektronische Identifikationseinheit keine Energieversorgungseinheit umfasst, sodass die elektronische Identifikationseinheit über externe Energieversorgungsvorrichtungen mit elektrischer Energie versorgt wird, oder wobei die elektronische Identifikationseinheit eine Energieversorgungseinheit zur Versorgung mit elektrischer Energie umfasst.

Der Erfinder hat erkannt, dass in den meisten Fällen das Senden von Informationen im erfindungsgemäßen Verfahren über weite Distanzen vorteilhafterweise nicht erforderlich ist. Insbesondere mit Blick auf den geringeren Energieverbrauch nahreichweitiger Funkverfahren, erachtet der Erfinder eine als RFID-Chip oder Bluetooth-Modul ausgeführte elektronische Identifikationseinheit als besonders bevorzugt. RFID-Chips werden überdies als vorteilhaft betrachtet, da sie sowohl in passiver als auch in aktiver Ausführung erhältlich sind. Für im Wesentlichen sämtliche Ausführungsformen relevant ist ein erfindungsgemäßes Verfahren, wobei die elektronische Sendeeinheit mittels elektromagnetischer Strahlung kommuniziert. Bevorzugt ist entsprechend ein erfindungsgemäßes Verfahren, wobei die elektronische Identifikationseinheit ein RFID-Chip oder ein Bluetooth-Modul, bevorzugt ein RFID Chip ist. Bevorzugt ist alternativ oder zusätzlich ein erfindungsgemäßes Verfahren, wobei das drahtlose Datenübertragungsverfahren ein Funkverfahren, bevorzugt ein nahreichweitiges Funkverfahren, ist, wobei das drahtlose Datenübertragungsverfahren besonders bevorzugt ausgewählt aus der Gruppe bestehend aus Bluetooth und RFID, ganz besonders bevorzugt RFID.

Mit Blick auf eine möglichst flexible Nutzung ist es vorteilhaft, wenn die elektronische Sendeeinheit zusätzlich dazu eingerichtet ist, Daten in dem drahtlosen Datenübertragungsverfahren zu empfangen, beispielsweise um nachträglich weitere Steuerungsinformationen aufspielen zu können. Bevorzugt ist daher ein erfindungsgemäßes Verfahren, wobei die elektronische Sendeeinheit eine elektronische Sende- und Empfangseinheit zum Senden und Empfangen von Daten in dem drahtlosen Datenübertragungsverfahren ist, wobei die elektronische Sendeeinheit bevorzugt ein Transponder, besonders bevorzugt ein passiver Transponder, ist.

In Verfahrensschritt b) des erfindungsgemäßen Verfahrens erfolgt das Senden der auf der Speichereinheit gespeicherten Steuerungsinformationen mit der Sendeeinheit und das Empfangen dieser Steuerungsinformationen mit der Empfangseinheit. Der Erfinder schlägt vor, den Verfahrensschritt b) auf die Art der elektronischen Identifikationseinheit abzustimmen. Für passive elektronischen Identifikationseinheiten, das heißt Identifikationseinheiten ohne eigene Energieversorgungseinheit, wird das Senden in den meisten Fällen infolge einer externen Anregung erfolgen. Die externe Anregung kann beispielsweise darin bestehen, dass die elektronische Identifikationseinheit einem elektrischen, magnetischen oder elektromagnetischen Feld ausgesetzt wird, sodass die für den Betrieb der elektronischen Identifikationseinheit notwendige Energie aus dem externen Feld gezogen werden kann. Das Senden kann beispielsweise automatisiert erfolgen, sobald die elektronische Identifikationseinheit aktiviert wird. Alternativ und insbesondere für aktive Identifikationseinheiten mit eigener Energieversorgungseinheit schlägt der Erfinder vor, dass das Senden in vorbestimmten Zeitintervallen erfolgen kann, um sicherzustellen, dass die Abtragvorrichtung die benötigten Informationen in hinreichend kurzen Zeitabständen erhält. Bevorzugt ist also ein erfindungsgemäßes Verfahren, wobei das Senden in Verfahrensschritt b) in Folge einer externen Anregung erfolgt, bevorzugt in Folge einer von einer externen Ausleseeinheit veranlassten oder beförderten externen Anregung, besonders bevorzugt in Folge der Strahlung eines elektromagnetischen Feldes, oder wobei das Senden in Verfahrensschritt b) in vorbestimmten Zeitintervallen erfolgt.

Mit Blick auf eine vorteilhafte Energiebilanz des erfindungsgemäßen Verfahrens erachtet es der Erfinder grundsätzlich als bevorzugt, wenn die elektronische Identifikationseinheit keine eigene Energiequelle aufweist. Zur Aktivierung der elektronischen Identifikationseinheit ist, wie vorstehend erläutert, in diesem Fall eine externe Energieversorgungseinheit erforderlich. Zur Reduktion der für die Durchführung des erfindungsgemäßen Verfahrens notwendigen Komponenten schlägt der Erfinder daher vor, die entsprechende Funktionalität in der Empfangseinheit vorzusehen, sodass diese dazu eingerichtet ist, eine externe Anregung zur Versorgung der elektronischen Identifikationseinheit mit Energie zu veranlassen oder zu befördern. Bevorzugt ist ein erfindungsgemäßes Verfahren, wobei die Empfangseinheit eine Ausleseeinheit umfasst, wobei die Ausleseeinheit dazu eingerichtet ist, eine externe Anregung, bevorzugt die Bildung eines elektromagnetischen Feldes, zu veranlassen oder zu befördern.

Der Erfinder erachtet es zusätzlich oder alternativ und mit Blick auf die Minimierung zusätzlicher für das erfindungsgemäße Verfahren benötigter Vorrichtungen als besonders vorteilhaft, wenn die Empfangseinheit von der Abtragvorrichtung umfasst ist. Bevorzugt ist also ein erfindungsgemäßes Verfahren, wobei die Empfangseinheit von der Abtragvorrichtung umfasst ist, und/oder wobei die Empfangseinheit ein Handlesegerät ist.

In Verfahrensschritt c) des erfindungsgemäßen Verfahrens wird der Laufstreifen in Abhängigkeit von den empfangenen Steuerungsinformationen abgetragen, d.h. die Abtragvorrichtung wird zumindest teilweise in Abhängigkeit von den aus der Identifikationseinheit ausgelesenen Steuerungsinformationen gesteuert. Zusätzlich können je nach Abnutzungsgrad auch zumindest abschnittsweise eine oder beide Seitenwände in Abhängigkeit von den empfangenen Steuerungsinformationen teilweise oder ganz abgetragen werden. Bevorzugt ist demnach ein erfindungsgemäßes Verfahren, wobei Verfahrensschritt c) zusätzlich das Abtragen zumindest einer, bevorzugt sämtlicher, Seitenwände des Fahrzeugreifens durch Abtragen von Material mit der Abtragvorrichtung umfasst, wobei das Abtragen in Abhängigkeit von den empfangenen Steuerungsinformationen erfolgt.

In den meisten Fällen wird das Abtragen durch ein mechanisches Abtrennen erfolgen, beispielsweise durch Schneiden oder Schleifen. Hierdurch soll zumindest das Reifenprofil des Laufstreifens, bevorzugt das Reifenprofil des Laufstreifens bis zu den unterliegenden Gürtellagen hin, vollständig vom Fahrzeugreifen abgetragen werden, sodass lediglich die Karkasse mit den darauf liegenden Gürtellagen als Casing für die Weiterverarbeitung in der kalten Runderneuerung verbleibt. Bevorzugt ist somit ein erfindungsgemäßes Verfahren, wobei das Abtragen des Laufstreifens in Verfahrensschritt c) durch mechanisches Abtrennen des Laufstreifens, bevorzugt durch Abtrennen des Laufstreifens von der Karkasse des Fahrzeugreifens, erfolgt, besonders bevorzugt durch Abschleifen des Laufstreifens. Bevorzugt ist zusätzlich oder alternativ ein erfindungsgemäßes Verfahren, wobei das Abtragen des Laufstreifens in Verfahrensschritt c) derart erfolgt, dass zumindest das Reifenprofil, bevorzugt das Reifenprofil bis zu den unterliegenden Gürtellagen vollständig vom Fahrzeugreifen abgetragen werden.

Ein wichtiger Vorteil des erfindungsgemäßen Verfahrens, insbesondere im Vergleich zu Verfahren aus dem Stand der Technik, ist die weitgehende Automatisierbarkeit des Verfahrensschrittes c). Diese weitgehende Automatisierung wird im erfindungsgemäßen Verfahren dadurch erreicht, dass das Abtragen des Laufstreifens in Abhängigkeit von den empfangenen Steuerungsinformationen erfolgt und insofern eine ständige manuelle Kontrolle des Zustandes der Oberfläche des Fahrzeugreifens bezüglich des auf ihr verbleibenden Laufstreifens entfallen kann. Die Steuerungsinformationen werden daher in den meisten Fällen geometrische Strukturinformationen des Fahrzeugreifens umfassen, d.h. Informationen über den strukturellen Aufbau der zu bearbeitenden Reifen, sodass ein Abtragen des Laufstreifens derart ermöglicht wird, dass aus dem resultierenden Casing ein runderneuerter Fahrzeugreifen mit optimalen Leistungseigenschaften erhalten werden kann. Bevorzugt ist entsprechend ein erfindungsgemäßes Verfahren, wobei die Steuerungsinformationen geometrische Strukturinformationen des Fahrzeugreifens umfassen, wobei die Steuerungsinformationen bevorzugt geometrische Strukturinformationen des Fahrzeugreifens sind. Solche geometrischen Strukturinformationen können von modernen Abtragvorrichtungen in Steuerungsbefehle für die Abtragung des Laufstreifen umgesetzt werden.

Der Erfinder hat dabei erkannt, dass diese Steuerungsinformationen vorteilhafterweise durch den Fahrzeugreifenhersteller selbst bereitgestellt werden können. Der Fahrzeugreifenhersteller hat nämlich oftmals im Gegensatz zu externen Dienstleistern, die häufig die kalte Runderneuerung von Fahrzeugreifen durchführen, bereits die meisten wesentlichen für ein optimales Abtragen des Laufstreifens notwendigen Informationen den Fahrzeugreifen betreffend, vorliegen. Parameter zum optimalen Abtrag des Laufstreifens, beispielsweise für verschiedene Reifentypen und Abnutzungsgrade, werden nämlich im Rahmen der heißen Runderneuerung von Fahrzeugreifen, die zumeist bei den Reifenherstellern durchgeführt wird, ohnehin erfasst bzw. gemessen. Durch Bereitstellung von geometrischen Strukturinformationen auf der Speichereinheit der elektronischen Identifikationseinheit des Fahrzeugreifens kann einem externen Dienstleister daher ohne übermäßigen Aufwand seitens des Fahrzeugreifenherstellers eine optimale und vereinfachte Abtragung des Laufstreifens des Fahrzeugreifens ermöglicht werden, sodass aus dem resultierenden Casing auch durch externe Dienstleister ein runderneuerter Fahrzeugreifen mit optimalen Fahreigenschaften erhalten werden kann.

Wie vorstehend erläutert, ermöglichen die geometrischen Strukturinformationen, welche von den Steuerungsinformationen umfasst werden, einen weitgehend automatisierten Abtrag des Laufstreifens zum Erhalt eines optimalen Casings. In bevorzugten Ausführungsformen umfasst dieses Casing die intakte Karkasse sowie sämtliche radial außenliegend angeordneten Gürtellagen. Der Erfinder hat für die geometrischen Strukturinformationen konkrete Ausführungsformen identifiziert, die eine besonders einfach und zeiteffiziente Verfahrensführung ermöglichen.

Die geometrischen Strukturinformationen können beispielsweise in Form der konkreten Lagenstruktur des Fahrzeugreifens vorliegen, sodass insbesondere die Dimensionen der unterschiedlichen Fahrzeugreifenlagen und optional Informationen über deren Abnutzungsgrad nach einer bestimmten Laufzeit oder gelaufener Kilometerzahl in der Speichereinheit gespeichert würden. Alternativ oder zusätzlich können die geometrischen Strukturinformationen eine fahrzeugreifenspezifische Abtragungskontur umfassen, welche für jeden Punkt des Fahrzeugreifens einen vorbestimmten Abtragungsgrad festlegt, beispielsweise in der Form, dass ein vorbestimmter Abtrageradius eingestellt wird. Alternativ oder zusätzlich erachtet es der Erfinder als besonders bevorzugt, wenn die geometrischen Strukturinformationen in Form von vorbestimmten Startpunktwerten und hiervon abhängigen Außendurchmesserwerten in den Steuerungsinformationen umfasst sind. Hierbei ist es zudem möglich, der Abtragvorrichtung, welche das Abtragen des Laufstreifens vornimmt, Befehle zur Ausführung eines Computerprogrammproduktes zu übergeben, welche ebenfalls von den Steuerungsinformationen umfasst sein können, wobei diese bevorzugt auf eine Steuerungssoftware der Abtragvorrichtung abgestimmt werden. Besonders bevorzugt ist daher ein erfindungsgemäßes Verfahren, wobei die geometrischen Strukturinformationen eine Abtragungskontur, bevorzugt eine fahrzeugreifenspezifische Abtragungskontur, umfassen. Bevorzugt ist alternativ oder zusätzlich ein erfindungsgemäßes Verfahren, wobei die geometrischen Strukturinformationen Informationen zur Lagenstruktur des Fahrzeugreifens umfassen, bevorzugt die Dimensionen einer, besonders bevorzugt sämtlicher, Fahrzeugreifenlagen. Bevorzugt ist alternativ oder zusätzlich ein erfindungsgemäßes Verfahren, wobei die geometrischen Strukturinformationen einen vorbestimmten Startpunktwert, bevorzugt einen zentralen vorbestimmten Startpunktwert, und einen oder mehrere, bevorzugt mehrere, von dem Startpunktwert abhängige durch Abtragung einzustellende Außendurchmesserwerte umfassen.

Die geometrischen Strukturinformationen können insbesondere durch Vermessung des Fahrzeugreifentyps erhalten werden und beispielsweise als mittlere Erfahrungswerte erfasst werden, die für den entsprechenden Reifentyp in einer hohen Abtrage-Effizienz resultieren, wobei die erforderlichen Informationen für die meisten Reifentypen ohnehin für den Fahrzeugreifehersteller verfügbar sind bzw. sich durch diesen relativ leicht erhalten lassen, beispielsweise im Rahmen einer heißen Runderneuerung von Reifen des entsprechenden Reifentyps. Insofern ist das Zur-Verfügung-Stellen der geometrischen Strukturinformationen auf der elektronischen Identifikationseinheit besonders zeit- und kosteneffektiv, um ein Verfahren zur Runderneuerung von Fahrzeugreifen auch für externe Dienstleister besonders attraktiv zu gestalten. Bevorzugt ist entsprechend ein erfindungsgemäßes Verfahren, wobei die geometrischen Strukturinformationen erhalten werden durch Vermessung eines Fahrzeugreifens eines vorbestimmten Reifentyps, wobei aus der Vermessung ein vorbestimmter Startpunktwert und einer oder mehrere von dem Startpunktwert abhängige durch Abtragung einzustellende Außendurchmesserwerte erhalten werden.

Möglich wäre prinzipiell ebenfalls ein erfindungsgemäßes Verfahren, wobei die geometrischen Strukturinformationen erhalten werden durch unterschiedlich starkes Abtragen des Laufstreifens von Fahrzeugreifen desselben Reifentyps und anschließendem Abgleich der Leistungseigenschaften hieraus erhaltener runderneuerter Fahrzeugreifen.

Die Steuerungsinformationen werden in den meisten Fällen, wie vorstehend erläutert, geometrische Strukturinformationen umfassen, wobei die Steuerungsinformationen in einigen Ausführungsformen diese geometrischen Strukturinformationen sind. Alternativ oder zusätzlich hierzu schlägt der Erfinder vor, dass die Steuerungsinformationen Befehle umfassen, die die Abtragvorrichtung dazu veranlassen, das Abtragen des Laufstreifens in Abhängigkeit der geometrischen Strukturinformationen vorzunehmen. In beiden Fällen hat der Erfinder erkannt, dass es vorteilhaft ist, eine elektronische Datenverarbeitungsvorrichtung vorzusehen, welche die Verarbeitung und/oder die Ausführung der empfangenen Steuerungsinformationen übernimmt, sodass der Laufstreifen entsprechend abgetragen werden kann. In besonders vorteilhaften Ausführungsformen ist diese elektronische Datenverarbeitungsvorrichtung Bestandteil der Abtragvorrichtung, sodass die Abtragvorrichtung in ganz besonders bevorzugten Ausführungsformen, in denen die Abtragvorrichtung überdies die Empfangseinheit umfasst, das Senden der Steuerungsinformationen initiieren kann und überdies die empfangenen Steuerungsinformationen mit der elektronischen Datenverarbeitungsvorrichtung verarbeiten und unmittelbar in Betriebsinformationen der Abtragvorrichtung umsetzen kann. Bevorzugt ist also ein erfindungsgemäßes Verfahren, wobei das Abtragen des Laufstreifens in Verfahrensschritt c) die Verarbeitung und/oder die Ausführung der empfangenen Steuerungsinformationen, bevorzugt die Verarbeitung der empfangenen Steuerungsinformationen, mit einer elektronischen Datenverarbeitungsvorrichtung, bevorzugt einer elektronischen Datenverarbeitungsvorrichtung der Abtragvorrichtung, umfasst.

Mit Blick auf eine besonders zeiteffiziente und präzise Verfahrensführung erachtet es der Erfinder als besonders bevorzugt, wenn das Abtragen des Laufstreifens in Verfahrensschritt c) entlang einer aus den empfangenen Steuerungsinformationen erhaltenen Abtragungskontur erfolgt. Die Abtragungskontur kann beispielsweise mit einer elektronischen Datenverarbeitungsvorrichtung aus den Steuerungsinformationen errechnet werden. Alternativ kann die Abtragungskontur auch selbst von den Steuerungsinformationen umfasst sein, beispielsweise in Form eines Computerprogrammproduktes, welches beim Ausführen durch eine elektronische Datenverarbeitungsvorrichtung der Abtragvorrichtung die Abtragung entlang der Abtragungskontur durch die Abtragvorrichtung initiiert. Explizit bevorzugt ist es allerdings, wenn die Steuerungsinformationen selbst die Abtragungskontur umfassen oder daraus bestehen, sodass die Steuerungsinformationen selbst keine Befehle oder Computerprogrammprodukte umfassen, sondern dass die Abtragvorrichtung den Abtrag des Laufstreifens anhand der übergebenen Abtragungskontur vornimmt. Bevorzugt ist also ein erfindungsgemäßes Verfahren, wobei das Abtragen des Laufstreifens in Verfahrensschritt c) entlang einer aus den empfangenen Steuerungsinformationen erhaltenen Abtragungskontur erfolgt. Bevorzugt ist zusätzlich oder alternativ überdies ein erfindungsgemäßes Verfahren, wobei die Verarbeitung der empfangenen Steuerungsinformationen derart erfolgt, dass eine Abtragungskontur für das Abtragen des Laufstreifens errechnet oder übergeben wird. Bevorzugt ist alternativ oder zusätzlich auch ein erfindungsgemäßes Verfahren, wobei die Steuerungsinformationen Informationen umfassen, die die Abtragvorrichtung dazu veranlassen, den Laufstreifen des Fahrzeugreifens in Abhängigkeit der Steuerungsinformationen abzutragen. Bevorzugt ist wiederum alternativ oder zusätzlich ein erfindungsgemäßes Verfahren, wobei die Steuerungsinformationen Befehle umfassen, die bei der Ausführung durch eine Datenverarbeitungsvorrichtung der Abtragvorrichtung, die Abtragvorrichtung dazu veranlassen, den Verfahrensschritt c) des erfindungsgemäßen Verfahrens auszuführen.

Die vorliegende Erfindung betrifft zusätzlich zum erfindungsgemäßen Verfahren zur Vorbereitung von Fahrzeugreifen für den Einsatz in der kalten Runderneuerung auch ein Verfahren zur kalten Runderneuerung eines Fahrzeugreifens, welches die Schritte des erfindungsgemäßen Verfahrens zur Vorbereitung von Fahrzeugreifen umfasst, und darauf aufbaut. In dem erfindungsgemäßen Verfahren zur kalten Runderneuerung eines Fahrzeugreifens wird ein bereits vulkanisierter Laufstreifen hergestellt oder zur Verfügung gestellt, um diesen auf dem Casing, das heißt der Oberfläche, welche durch den Abtrag des Laufstreifens des Fahrzeugreifens erhalten wurde, zu befestigen. In den meisten Fällen erfolgt diese Befestigung mittels eines Haftmittels, beispielsweise mittels eines vulkanisierbaren Haftmittels, das durch Vulkanisation eine langlebige und feste Verbindung zwischen dem Casing und dem Laufstreifen schafft.

Die Erfindung betrifft daher ebenfalls ein Verfahren zur kalten Runderneuerung eines Fahrzeugreifens, umfassend die Schritte des erfindungsgemäßen Verfahrens zur Vorbereitung von Fahrzeugreifen, sowie die folgenden Verfahrensschritte:
d) Herstellen oder Bereitstellen eines vulkanisierten Laufstreifens, und
e) Befestigen des vulkanisierten Laufstreifens auf der durch den Abtrag des Laufstreifens des Fahrzeugreifens erhaltenen Oberfläche, bevorzugt mittels eines Haftmittels.

Die Erfindung betrifft überdies eine Abtragvorrichtung zur Vorbereitung von Fahrzeugreifen für den Einsatz in der kalten Runderneuerung, in einem erfindungsgemäßen Verfahren, umfassend:
i) eine Empfangseinheit zum Empfangen der in einem drahtlosen Datenübertragungsverfahren gesendeten Steuerungsinformationen des Fahrzeugreifens, und
ii) Mittel zum Abtragen des Laufstreifens des Fahrzeugreifens,
wobei die Abtragvorrichtung dazu eingerichtet ist, den Laufstreifen des Fahrzeugreifens durch Abtragen von Material in Abhängigkeit von den empfangenen Steuerungsinformationen abzutragen.

Die erfindungsgemäße Abtragvorrichtung ist für den Einsatz in einem der beiden erfindungsgemäßen Verfahren besonders geeignet und umfasst insbesondere die Mittel für die Kommunikation mit der Identifikationseinheit im Fahrzeugreifen, so dass die Abtragvorrichtung die Steuerungsinformationen aus einem in die Abtragvorrichtung eingegebenen Fahrzeugreifen auslesen und den Abtragvorgang daran ausrichten kann. Beispielhaft ist eine erfindungsgemäße Abtragvorrichtung, wobei die Mittel zum Abtragen des Laufstreifens Schneidwerkzeuge umfassen.

Entsprechend der besonders bevorzugten Ausgestaltungen des erfindungsgemäßen Verfahrens zur Vorbereitung von Fahrzeugreifen für den Einsatz in der kalten Runderneuerung umfasst die erfindungsgemäße Abtragvorrichtung in besonders bevorzugten Ausgestaltungen eine elektronische Datenverarbeitungsvorrichtung, welche im Zweifel dazu eingerichtet ist, die ausgelesenen Steuerungsinformationen zu verarbeiten und in einen für die Abtragvorrichtung umsetzbaren Satz von Steuerungsinformationen umzusetzen. Bevorzugt ist also eine erfindungsgemäße Abtragvorrichtung, wobei die Abtragvorrichtung umfasst:
iii) eine elektronische Datenverarbeitungsvorrichtung.

Besonders bevorzugt sind darüber hinaus erfindungsgemäße Abtragvorrichtungen, die sich für die Durchführung bevorzugter Verfahren eignen.

Bevorzugt ist insoweit eine erfindungsgemäße Abtragvorrichtung, wobei die elektronische Datenverarbeitungsvorrichtung dazu eingerichtet ist, die Abtragvorrichtung, bevorzugt die Empfangseinheit der Abtragvorrichtung, dazu zu veranlassen, eine externe Anregung zu befördern oder zu bewirken, wobei in Folge der externen Anregung das Senden der Steuerungsinformationen initiiert wird.

Bevorzugt ist zusätzlich oder alternativ eine erfindungsgemäße Abtragvorrichtung, wobei die elektronische Datenverarbeitungsvorrichtung dazu eingerichtet ist, eine Abtragungskontur aus den empfangenen Steuerungsinformationen zu erhalten.

Bevorzugt ist zusätzlich oder alternativ eine erfindungsgemäße Abtragvorrichtung, wobei die elektronische Datenverarbeitungsvorrichtung dazu eingerichtet ist, die Abtragvorrichtung dazu zu veranlassen, den Laufstreifen des Fahrzeugreifens entlang der Abtragungskontur abzutragen.

Die Erfindung betrifft zudem einen Fahrzeugreifen zum Einsatz in einem erfindungsgemäßen Verfahren, mit einer elektronischen Identifikationseinheit, wobei die elektronische Identifikationseinheit umfasst:
i) eine elektronische Sendeeinheit zum Senden von Daten in einem drahtlosen Datenübertragungsverfahren, und
ii) eine Speichereinheit, wobei die Speichereinheit Steuerungsinformationen umfasst, wobei die Steuerungsinformationen Informationen umfassen, die eine Abtragvorrichtung dazu veranlassen, einen Laufstreifen des Fahrzeugreifens in Abhängigkeit der Steuerungsinformationen abzutragen.

Im Rahmen der vorliegenden Erfindung wird nachfolgend überdies ein Verfahren zum Nachrüsten eines Fahrzeugreifens offenbart. Offenbart wird nämlich ein Verfahren zum Nachrüsten eines Fahrzeugreifens, umfassend die Verfahrensschritte:
X) Bereitstellen oder Herstellen eines Fahrzeugreifens mit einer elektronischen Identifikationseinheit, wobei die elektronische Identifikationseinheit umfasst:
   i) eine elektronische Sendeeinheit zum Senden von Daten in einem drahtlosen Datenübertragungsverfahren, und
   ii) eine Speichereinheit,
Y) Bereitstellen oder Erfassen von geometrischen Strukturinformationen des Fahrzeugreifens und Ableiten von Steuerungsinformationen aus den geometrischen Strukturinformationen, und
Z) Senden der Steuerungsinformationen an die elektronische Identifikationseinheit des Fahrzeugreifens und Speichern der Steuerungsinformationen in der Speichereinheit der Identifikationseinheit.

Das obenstehende Verfahren zum Nachrüsten eines Fahrzeugreifens ermöglicht insbesondere den Erhalt eines erfindungsgemäßen Fahrzeugreifens, welcher nach Erreichen des Lebenszeitendes für den Einsatz in einem der beiden erfindungsgemäßen Verfahren besonders geeignet ist. Aus den im Verfahrensschritt Y) des obenstehend offenbarten Verfahrens bereitgestellten oder erfassten geometrischen Strukturinformationen des Fahrzeugreifens werden die Steuerungsinformationen abgeleitet und an die elektronische Identifikationseinheit des Fahrzeugreifens gesendet, sodass diese in einem Verfahren zur kalten Runderneuerung von Fahrzeugreifen zugänglich sind. Eine Verschlüsselung der Steuerungsinformationen erachtet der Erfinder ebenfalls als denkbar, um einen unsachgemäßen Gebrauch der Steuerungsinformationen zu vermeiden. Grundsätzlich erachtet es der Erfinder dabei als besonders bevorzugt, wenn der Fahrzeugreifenhersteller selbst das Verfahren zum Nachrüsten von Fahrzeugreifen durchführt, da er in den meisten Fällen, wie vorstehend erläutert, selbst die geometrischen Strukturinformationen vorliegen hat oder leicht in geeigneter Qualität und Anzahl zusammenstellen kann.

Offenbart wird überdies eine Verwendung eines erfindungsgemäßen Fahrzeugreifens zur Verbesserung der Leistungseigenschaften daraus hergestellter runderneuerter Fahrzeugreifen.

Offenbart wird ebenfalls eine Verwendung einer elektronischen Identifikationseinheit in einem erfindungsgemäßen Fahrzeugreifen zur Steigerung der Wiederverwertbarkeit von Fahrzeugreifen.

Die vorliegende Erfindung löst somit insbesondere die Aufgabe, die kalte Runderneuerung von Fahrzeugreifen zeiteffizienter zu gestalten und gleichzeitig die Kosten, insbesondere Personalkosten, von externen Dienstleistern zu reduzieren und insbesondere eine weitgehende Automatisierung zu erreichen, gerade auch bei der abwechselnden Verarbeitung von unterschiedlichen Reifentypen. Hierdurch wird es Fahrzeugreifenherstellern zudem ermöglicht, ihre Fahrzeugreifen im Vergleich zu aus dem Stand der Technik bekannten Fahrzeugreifen attraktiver für externe Dienstleister im Bereich der kalten Runderneuerung zu machen bzw. deren Kosten zu senken, so dass sich auch für Reifenkunden ein Vorteil ergibt, insbesondere für Fuhrparkbetreiber.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: ein Flussdiagramm einer beispielhaften erfindungsgemäßen Verfahrensführung; und
- Fig. 2: eine schematische Ansicht eines erfindungsgemäßen Fahrzeugreifens mit einer elektronischen Identifikationseinheit.

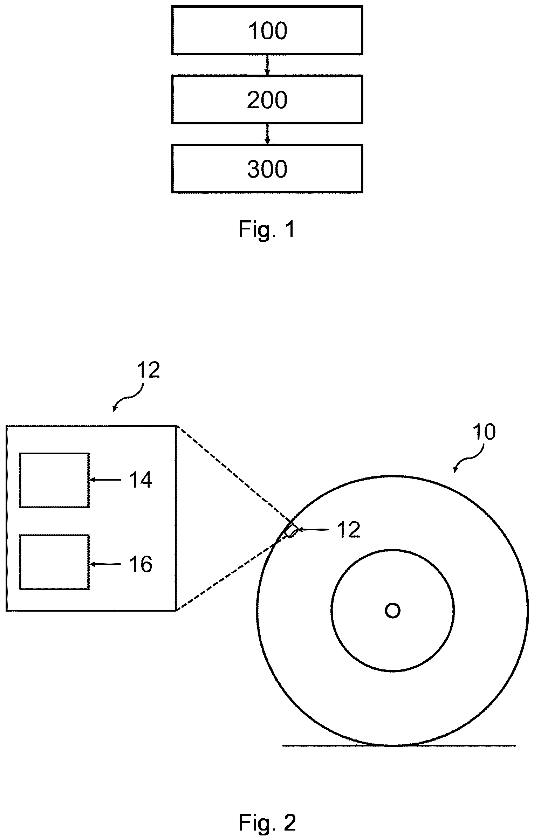

Fig. 1 zeigt ein Flussdiagramm des erfindungsgemäßen Verfahrens zur Vorbereitung von Fahrzeugreifen 10 für den Einsatz in der kalten Runderneuerung in einer bevorzugten Ausführungsform.

Der in dem Verfahren der Fig. 1 eingesetzte erfindungsgemäße Fahrzeugreifen 10 ist in Fig. 2 gezeigt und als LKW-Altreifen ausgeführt, der bereits für mehr als 40000 km am Einsatz am Fahrzeug gewesen ist. Der Fahrzeugreifen 10 weist in seiner Seitenwand eine elektronische Identifikationseinheit 12 mit einer elektronischen Sendeeinheit 14 zum Senden von Daten in einem Funkverfahren sowie eine Speichereinheit 16 auf. Bei der elektronischen Identifikationseinheit 12 handelt es sich im gezeigten Beispiel um einen passiven RFID-Transponder, der entsprechend keine eigene Energiequelle umfasst.

Auf der Speichereinheit 16 der elektronischen Identifikationseinheit 12 sind Steuerungsinformationen gespeichert. Die Steuerungsinformationen umfassen geometrische Strukturinformationen in Form einer optimierten Abtragungskontur, die einen spezifisch auf den Fahrzeugreifen 10 abgestimmten Startpunktwert für ein Schneidwerkzeug einer Abtragvorrichtung sowie mehrere von dem Startpunktwert abhängige Außendurchmesserwerte umfasst, die bei der Abtragung des Laufstreifens eingestellt werden sollen. Die optimierte Abtragungskontur wurde vom Fahrzeugreifenhersteller durch Vermessung des Fahrzeugreifens 10 erhalten und anschließend auf der Speichereinheit 16 gespeichert.

Im ersten Verfahrensschritt 100 wird der in Fig. 2 gezeigte abgefahrene Fahrzeugreifen 10 bereitgestellt und in einer Abtragvorrichtung angeordnet, beispielsweise auf einer Reifentrommel. Im zweiten Verfahrensschritt 200 werden die auf der Speichereinheit 16 gespeicherten Steuerungsinformationen mit der Sendeeinheit 14 an eine in der Abtragvorrichtung angeordnete Empfangseinheit gesendet und dort empfangen.

Da die Empfangseinheit von der Abtragvorrichtung umfasst ist, können die empfangenen Steuerungsinformationen im dritten Verfahrensschritt 300 direkt mit einer elektronischen Datenverarbeitungsvorrichtung der Abtragvorrichtung derart verarbeitet werden, dass der Laufstreifen und zumindest abschnittsweise ebenfalls die Seitenwand des abgefahrenen Fahrzeugreifens 10 in Abhängigkeit von den empfangenen Steuerungsinformationen, das heißt entlang der Abtragungskontur, abgetragen werden kann. Das Abtragen erfolgt durch mechanisches Abtrennen von Material so, dass zumindest das Reifenprofil bis zu den unterliegenden Gürtellagen vom Casing, das heißt der Karkasse mit den Gürtellagen, abgetragen wird. Insoweit kann die aufwändige manuelle und wiederholte Prüfung des verbleibenden Laufstreifens auf dem Casing während des Abtragens des abgefahrenen Laufstreifens vermieden oder zumindest stark reduziert werden und somit das Verfahren zur Vorbereitung von Fahrzeugreifen 10 für die kalte Runderneuerung zeit- und kosteneffizienter durchgeführt werden.

Aus dem wie obenstehend beschrieben erhaltenen Casing kann in einem erfindungsgemäßen Verfahren zur kalten Runderneuerung von Fahrzeugreifen 10 ein runderneuerter Fahrzeugreifen erhalten werden.

### Bezugszeichenliste

- 10: Fahrzeugluftreifen
- 12: elektronische Identifikationseinheit
- 14: elektronische Sendeeinheit
- 16: Speichereinheit

- 100: Verfahrensschritt a)
- 200: Verfahrensschritt b)
- 300: Verfahrensschritt c)

## Patentansprüche

1. Verfahren zur Vorbereitung von Fahrzeugreifen (10) für den Einsatz in der kalten Runderneuerung, umfassend die Verfahrensschritte:
a) Bereitstellen eines Fahrzeugreifens (10) mit einer elektronischen Identifikationseinheit (12), wobei die elektronische Identifikationseinheit (12) umfasst:
i) eine elektronische Sendeeinheit (14) zum Senden von Daten in einem drahtlosen Datenübertragungsverfahren, und
ii) eine Speichereinheit (16), wobei auf der Speichereinheit (16) Steuerungsinformationen gespeichert sind,
b) Senden der auf der Speichereinheit (16) gespeicherten Steuerungsinformationen mit der Sendeeinheit (14) und Empfangen der Steuerungsinformationen mit einer Empfangseinheit, und
c) Abtragen eines Laufstreifens des Fahrzeugreifens (10) durch Abtragen von Material mit einer Abtragvorrichtung, wobei das Abtragen in Abhängigkeit von den empfangenen Steuerungsinformationen erfolgt.

2. Verfahren nach Anspruch 1, wobei die elektronische Identifikationseinheit (12) ein RFID-Chip oder ein Bluetooth-Modul ist.

3. Verfahren nach einem der Ansprüche 1 oder 2, wobei das Senden in Verfahrensschritt b) in Folge einer externen Anregung erfolgt,
oder wobei das Senden in Verfahrensschritt b) in vorbestimmten Zeitintervallen erfolgt.

4. Verfahren nach einem der Ansprüche 1 bis 3, wobei die Steuerungsinformationen geometrische Strukturinformationen des Fahrzeugreifens (10) umfassen.

5. Verfahren nach Anspruch 4, wobei die geometrischen Strukturinformationen Informationen zur Lagenstruktur des Fahrzeugreifens (10) umfassen,
und/oder wobei die geometrischen Strukturinformationen eine Abtragungskontur umfassen.

6. Verfahren nach einem der Ansprüche 1 bis 5, wobei das Abtragen des Laufstreifens in Verfahrensschritt c) die Verarbeitung und/oder die Ausführung der empfangenen Steuerungsinformationen mit einer elektronischen Datenverarbeitungsvorrichtung umfasst.

7. Verfahren nach einem der Ansprüche 1 bis 6, wobei das Abtragen des Laufstreifens in Verfahrensschritt c) entlang einer aus den empfangenen Steuerungsinformationen erhaltenen Abtragungskontur erfolgt.

8. Verfahren zur kalten Runderneuerung eines Fahrzeugreifens (10), umfassend die Schritte des Verfahrens zur Vorbereitung von Fahrzeugreifen (10) nach einem der Ansprüche 1 bis 7, sowie die folgenden Verfahrensschritte:
d) Herstellen oder Bereitstellen eines vulkanisierten Laufstreifens, und
e) Befestigen des vulkanisierten Laufstreifens auf der durch den Abtrag des Laufstreifens des Fahrzeugreifens (10) erhaltenen Oberfläche.

9. Abtragvorrichtung zur Vorbereitung von Fahrzeugreifen (10) für den Einsatz in der kalten Runderneuerung, in einem Verfahren nach einem der Ansprüche 1 bis 8, umfassend:
i) eine Empfangseinheit zum Empfangen der in einem drahtlosen Datenübertragungsverfahren gesendeten Steuerungsinformationen des Fahrzeugreifens (10), und
ii) Mittel zum Abtragen des Laufstreifens des Fahrzeugreifens (10),
wobei die Abtragvorrichtung dazu eingerichtet ist, den Laufstreifen des Fahrzeugreifens (10) durch Abtragen von Material in Abhängigkeit von den empfangenen Steuerungsinformationen abzutragen.

10. Fahrzeugreifen (10) zum Einsatz in einem Verfahren nach einem der Ansprüche 1 bis 8, mit einer elektronischen Identifikationseinheit (12), wobei die elektronische Identifikationseinheit (12) umfasst:
i) eine elektronische Sendeeinheit (14) zum Senden von Daten in einem drahtlosen Datenübertragungsverfahren, und
ii) eine Speichereinheit (16), wobei die Speichereinheit (16) Steuerungsinformationen umfasst, wobei die Steuerungsinformationen Informationen umfassen, die eine Abtragvorrichtung dazu veranlassen, einen Laufstreifen des Fahrzeugreifens (10) in Abhängigkeit der Steuerungsinformationen abzutragen.
